## Europäisches Patentamt
## European Patent Office
## Office européen des brevets

(11) Publication number: **0 138 665**
**B1**

# EUROPEAN PATENT SPECIFICATION

(45) Date of publication of patent specification: 07.06.89

(51) Int. Cl.⁴: **G 06 K 9/62**, G 01 N 21/88, G 06 F 15/20

(21) Application number: 84401826.7

(22) Date of filing: 14.09.84

(54) Inspecting method and apparatus for photomask pattern.

(30) Priority: 16.09.83 JP 171811/83

(43) Date of publication of application:
24.04.85 Bulletin 85/17

(45) Publication of the grant of the patent:
07.06.89 Bulletin 89/23

(84) Designated Contracting States:
DE FR GB

(56) References cited:
DE-A-3 013 833

IBM TECHNICAL DISCLOSURE BULLETIN, vol.
25, no. 11b, April 1983, pages 6080-6081, New
York, US; J.C. HARMON "Angular Features for
character recognition"

(73) Proprietor: FUJITSU LIMITED
1015, Kamikodanaka Nakahara-ku
Kawasaki-shi Kanagawa 211 (JP)

(72) Inventor: Kobayashi, Kenichi
34-3 Nagasaki 6 Chome
Toshima-ku Tokyo 171 (JP)
Inventor: Matsuyama, Takayoshi
303-10 Sakato Takatsu-ku
Kawasaki-shi Kanagawa 213 (JP)

(74) Representative: Descourtieux, Philippe et al
CABINET BEAU de LOMENIE 55 rue
d'Amsterdam
F-75008 Paris (FR)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Background of the Invention

The present invention relates to a method and an apparatus for inspecting a photomask pattern applied to the fabrication of a semiconductor device such as a large semiconductor integrated circuit.

The photomask pattern generally consists of a plurality of patterns, so called "unit patterns", each having the same shape and size, in order to fabricate efficiently a plurality of semiconductor devices on a semiconductor slice by a printing process. The object of the present invention is to inspect photomask patterns consisting of a plurality of unit patterns.

Pattern inspection can be classified into two categories: a database comparing inspection, and a pattern comparing inspection. The former consists in inspecting a unit pattern by comparing it with its designing data, and the latter consists in inspecting one unit pattern by comparing it with another unit pattern which has the same shape and size.

Recently, the semiconductor devices have become so complicated and with a so high packing density that the database comparing inspection requires a lot of inspecting time and designing data. Therefore, the pattern comparing method is more applicable than the database comparing method for the inspection of a photomask pattern.

The pattern comparing method can also be classified into two categories: an analog comparing method, and a digital comparing method. The digital comparing method is essentially preferable with respect to its accuracy, and is more and more used because the digital technology has recently advanced and its cost has lowered.

The digital pattern comparing inspection is performed as follows: (1) a pair of parts being assumed to have a same shape and size in respective two unit patterns are selected by two respective optical systems; (2) the two optical images of the parts obtained by the respective optical systems are converted into two grouped analog video signals by respective image sensors in the optical systems; (3) the two grouped analog video signals are respectively digitized into two grouped digital video signals;(4) the two grouped digital video signals are first stored as two grouped pattern data in two respective image memories each having a memory matrix whose memory elements are arranged corresponding to the arrangement of the picture elements in each optical image so as to satisfy the resolution required for the inspection; and (5) the two grouped pattern data are compared to each other.

The photomask is mounted on a stage for inspection; the selection of the two unit patterns to be compared can be made by shifting the stage stepwise and repeatedly and the two optical images can be simultaneously obtained by scanning the stage.

The digital comparing method has the following merit in comparison with the analog comparing method: the influence of electric noise caused by shifting or scanning the stage can be avoided. However, the digital comparing method has also a demerit in that it requires a lot of time for data processing; it takes as much as several times compared with the analog comparing method.

To avoid this demerit, a new technology of digital comparing method called "vector comparing method" has been developed and is actually used; for example, this method is used in a photomask inspecting apparatus called "KLA 100 or 200 series" which is manufactured by the "KLA Corporation" in U.S.A. The vector comparing method comes from the conception that the difference between the data arrangements in two grouped pattern data can be treated as a comparing subject, by applying a vector means. With the vector comparing method, it is not necessary to compare the pattern datum in every element of the image memory matrix, so that the data processing time can be shortened.

The vector comparing method is expected to be an excellent method because of its high accuracy, high sensitivity, and short processing time; however, it has been found that a problem may arise in that some kinds of defects in the pattern cannot be detected. The present invention intends to solve this problem. Before disclosing the present invention, the prior art vector comparing method and the related problems will be discussed.

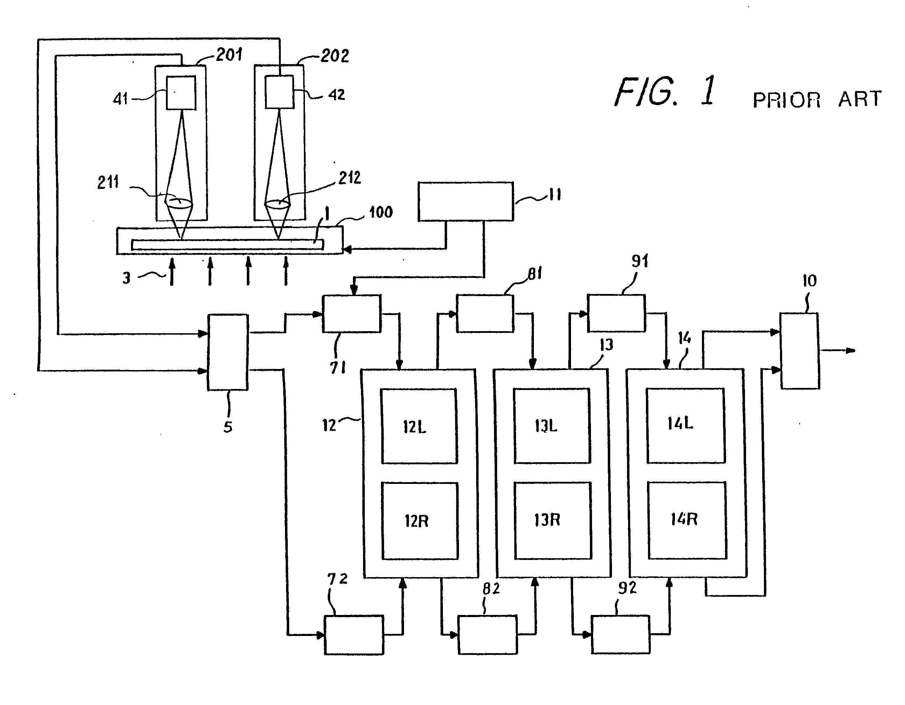

Fig. 1 shows a block diagram of a prior art apparatus for vector comparing inspection. In this figure, a photomask 1 is mounted on a stage 100 and light 3 is irradiated from beneath the photomask 1 so that two respective parts in two respective unit patterns can be caught by a left optical system 201 and a right optical system 202. The left and right optical systems 201 and 202 respectively consist of lens systems 211 and 212 and image sensors 41 and 42. Each of the image sensors 41 and 42 consists of linear arrayed sensor elements and each element corresponds to the picture element of the unit pattern which satisfies the resolution required for the inspection. Each grouped video signal from the image sensor 41 and 42 is produced by scanning the stage 100 perpendicularly to the arrayed direction of the image sensor. The distance between the optical system 201 and 202 is adjusted so that the two optical images of respective parts in two respective unit patterns can be compared. The sequential comparison between two parts in respective unit patterns can be made by shifting the stage 100 stepwise and repeatedly. The above scanning and shifting of the stage 100 are controlled by a controller 11. The two grouped analog video signals from the image sensor 41 and 42 are sent to an amplitude distributor 5 in which the two grouped analog video signals are respectively converted to two grouped digital video signals so that the amplitude of each analog video signal is distributed into three levels such asabuted into three levels such as white (W), grey (G), and black (B) corresponding to the amplitude being low, medium, and high. In these three levels, the level G is provided to prevent the occurrence of a false error. For example, when the amplitude of the analog signal is in a middle region, and if there was no G level, the digital video signal would have to be either B or W; this would produce a false error. The level G gives a margin to control how to prevent the occurrence of false errors. The two group digital video signals are stored as pattern data into a first left memory 12L and a first right memory 2R of an image memory 12 by means of left and right write-in unit 71 and 72, respectively, under the control of the controller 11.

As a photomask pattern is constructed with very high packing density, a minimum area as small as 0.5 (μm) × 0.5 (μm) is required for the inspecting resolution on the photomask pattern. If the linear arrayed image sensor is constituted by as much as 512 sensing elements and if the scanning of the stage 100 is performed on a distance as long as the distance corresponding to 512 sensing elements, the resulting optical image is formed by 512 × 512 elements at the image plane of the optical system. This is equivalent to a size of 256 (μm) × 256 (μm) on the photomask 1, and this is the area of a comparing part in the unit pattern.

To store the above pattern data, each memory matrix in the first left and the first right memory 12L and 12R, has 512 × 512 matrix elements. However a quantity of pattern data as large as 512 × 512 matrix elements is too much to be inspected simultaneously with a high accuracy, so that the pattern data in the 512 × 512 matrix elements of each first memory 12L and 12R are separated into a set of 4 × 4 matrix elements and stored respectively into a second left memory 13L and a second right memory 13R of an image memory 13; these separation and memorisation are respectively performed by means of a left separator 81 and a right one 82. The separated data become the subject of the vector comparing inspection and these separation and memorization are sequentially advanced each time the inspection of the separated data is over.

Any of the signal W, G, or B corresponds to a pattern datum in each matrix element of each second memory 13L or 13R, so, vector means can be used to form a boundary between neighboring elements. In the prior art, vectors are provided in four directions: left, right, up, and down, with equal magnitude, and the direction is determined by the following definition: when the datum B and W are adjacently arranged along longitude or latitude, the vector direction is defined from B to W; when the datum G is surrounded by the data W in all four directions, four vectors from G to W are provided along longitude and latitude; when the datum G is surrounded by the data B in all four directions, four vectors from B to G are provided along longitude and latitude; and when the data are arranged like B—G—W in longitude or latitude direction, G is changed to B so that only one vector from the changed B to W is provided. Thus, in the prior art, the vectors can be provided along longitude and latitude, but not along a diagonal.

These vectors are generated by a left vector generator 91 and a right one 92, and the vector data are respectively fed to a left vector memory 14L and a right one 14R in a vector memory 14. The vector data in the vector memory 14L and 14R are compared by a vector comparator 10 in each one of the vector directions. For example, if there is a right directional vector in the left memory and no right directional vector in the right memory, the comparator 10 outputs the information that there is a defect; if there are two right directional vectors in the left memory and a right directional vector in the right memory, the comparator 10 outputs the information that there is no defect. Thus, the comparator 10 does not care of the total number of respective directional vectors in each memory, but only compares whether there are vectors having the same direction in the left and the right memory or not; this will be of significant importance for the present invention.

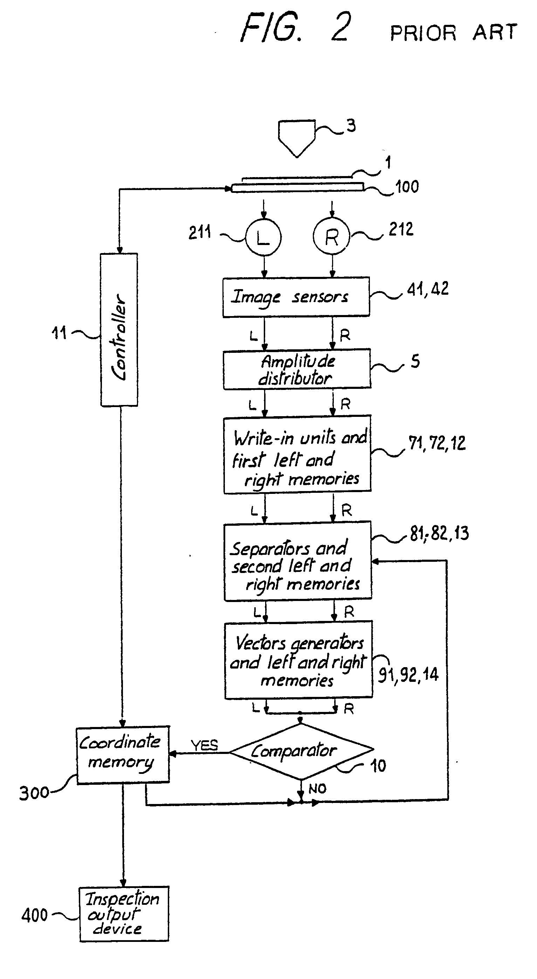

Fig. 2 is a flow chart corresponding to the prior art inspecting apparatus shown in Fig. 1. Reference numerals in Fig. 2 are the same as the block numerals in Fig. 1, showing that the functions of the blocks exist there, except a stage coordinate memory 300 and an inspection output device 400. When the vector comparator 10 produces a "NO" signal, this means that there is no defect; the signal is fed back to the separators 81 and 82 to control the inspection of the next separated patterns; when the vector comparator 10 outputs a "YES" signal, this means that there is a defect, the stage coordinate memory 300 memorizes the stage position at the time when the defect is detected. After the memorization, the stage coordinate memory 300 controls the separators 81 and 82 to inspect the next separated patterns. When the inspection of the whole photomask pattern is finished, the operator can check the detail of the inspection results by observing the data stored in the stage coordinate memory 300 on the inspection output device 400 such as cathode-ray tube or a sheet of printed paper.

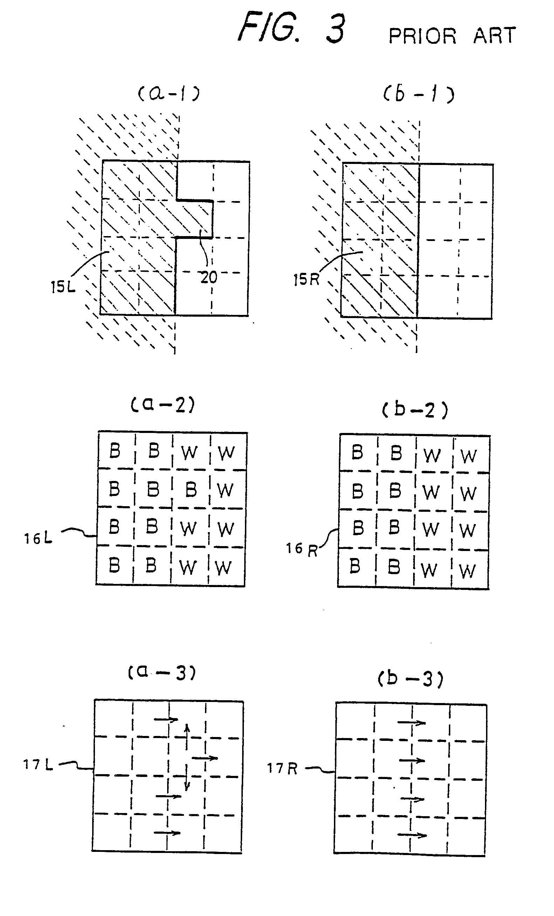

Fig. 3 illustrates how the prior art vector comparing inspection is performed, showing an example of a defect on the photomask pattern. In Fig. 3, (a—1) and (b—1) represent the optical images of the parts of the photomask pattern to be compared to each other. (a—1) represents the optical image corresponding to the separated data in the second left memory 13L and (b—1) represents that in the second right memory 13R. The oblique dotted lines located outside the square frame in (a—1) and (b—1) show how the optical image continues in the photomask pattern; a pattern 15L in (a—1) has a defective part 20 and a pattern 15R in (b—1) is assumed to be normal. A data matrix 16L in (a—2) shows the separated data in the second left memory 13L, and a data matrix 16R in (b—2) shows the separated data in the second right memory 13R. Patterns 17L and 17R in (a—3) and (b—3) respectively show the vector patterns in the left vector memory 14L and the right one 14R. Comparing the vector directions in (a—3) and (b—3), the following results can be obtained: a right vector exists in both memories, a left vector does not exist in both memories, an up vector exists only in the left memory, and a down vector also exists only in the left memory. Therefore, the comparator 10 in Fig. 1 outputs the information that there is a defect in the photomask. Thus, the defective part 20 in the separated pattern 151 can be detected by the vector comparing inspection.

The digital pattern datum at the defective part 20 was B in the above example. However, even though the patern datum is G, that is, the defect is as small as the half of the part 20, the same results can be obtained, because the data including the defective part 20 are B-G-W in latitude and this arrangement is changed to B-B-W in the vector generator 91. Thus, the vector comparing inspection is effective to detect a very small defect, and further, importantly, the inspection can be made very quickly because it is performed only by comparing the directions of respective vector data. However, it has been found that with this inspection method, some pattern is impossible to be detected even though the detected signal has enough amplitude like a datum B.

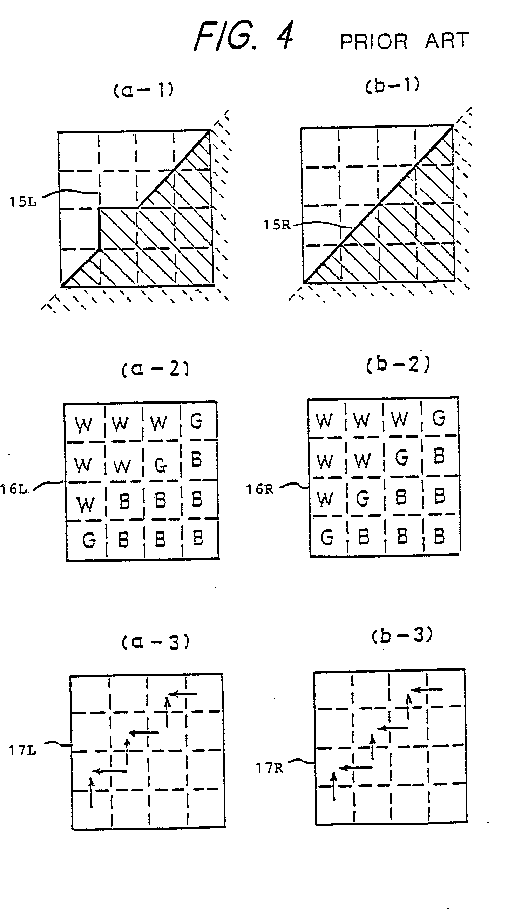

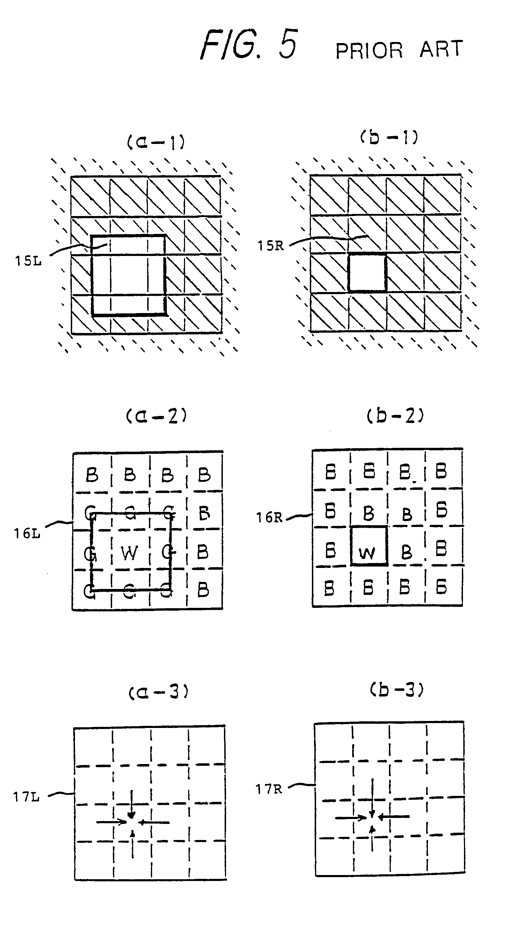

Fig. 4 and 5 illustrate the problems which may arise with the vector comparing inspection of the prior art, by showing examples of indetectable defects. Fig. 4 shows a defect stuck out from a slant pattern. Fig. 5 shows square holes in respective separated patterns; corresponding sides of the square holes are parallel each other and the shapes are equal, but the sizes are different.

In Fig. 4, the situation of each illustration is the same as in Fig. 3. A separated pattern 15L in (a—1) has a defective part and a separated pattern 15R in (b—1) is normal. As the pattern appears in slant with respect to the matrix frame, the pattern data at the slant edge of the pattern are G. So, the data matrices in the separated memories 13L and 13R become as shown by data matrices 16L and 16R in (a—2) and (b—2), and the vector patterns in the vector memories 14L and 14R become as shown in (a—3) and (b—3). Comparing the vector patterns 17L and 17R, they appear to have the same quantity of vectors in every direction. This results as if there was no defect on the photomask pattern.

In Fig. 5, the separated pattern data become as shown in (a—2) and (b—2) and the respective vector patterns become as shown in (a—3) and (b—3). This results also as if there was no defect, because the vectors in the left and the right memory are equal in every direction.

The defect as mentioned in Fig. 4 or 5 often appears in the inspection of the photomask pattern. For example, the problem of the square holes occurs in the inspection of a contact hole in a large scale integrated circuit; it is very important to solve this problem for improving the vector comparing method.

Summary of the Invention

Therefore, an object of the present invention is to improve the prior art vector comparing method for photomask pattern inspection so that the defects which have been impossible to be detected by the prior art method can be detected by the vector comparing method and apparatus of the present invention.

The method according to the present invention includes the steps which consist in:

taking a pair of optical images from paired parts of the photomask pattern which are to be compared;

converting said pair of optical images into two grouped electrical analog signals;

distributing said two grouped analog signals into two grouped digital data, each datum thereof being selected among three data B, G or W in accordance with high, middle, or low amplitude of said analog signals;

separating sequentially and respectively two grouped separated data from said two grouped digital data, the number of matrix elements of said grouped separated data being less than those of said grouped digital data;

providing at least two grouped shifted data which are respectively shifted with respect to said two grouped separated data by at least a shift amount of at least one matrix element in a latitudinal or longitudinal direction or both in latitudinal and longitudinal directions;

synthesizing each of said two grouped separated data with one or each respective grouped shifted data for providing at least two grouped synthesized data, the data B, G and W in said grouped synthesized data being logically calculated by applying following B priority logic or W priority logic in said synthesizing step:

| | B priority logic | W priority logic |
|---|---|---|
| B + B − | B | B |
| B + G − | B | G |
| B + W − | B | W |
| G + G − | G | G |
| G + W − | G | W |
| W + W − | W | W |

the choice between said B and W priority logics being made on precognition of said photomask pattern;

generating vectors from the arrangements of said at least two grouped synthesized data for providing at least two grouped vectors, comprising:

a vector having a direction from B to W when said synthesized data are arranged neighboringly B—W in a latitudinal, a longitudinal, or a diagonal direction,

a vector having a direction from B to G for said data arranged neighboringly B—G in said directions, or

a vector having a direction from to G to W for said data arranged neighboringly G—W in said directions, all vectors having an equal magnitude;

summing respective amounts of vectors each having a same direction in each grouped vector;

comparing respectively said summations in said at least two grouped vectors for detecting differences between said summations; and

producing an output indicative that said photomask pattern has a defect when at least one difference is detected.

By applying the present invention to the vector comparing method and apparatus of the prior art, any kind of defect in a photomask pattern can be detected with high accuracy, high sensitivity, and high speed.

Brief Description of the Drawings

Fig. 1 is a block diagram of a photomask inspecting apparatus applying a vector comparing method of the prior art.

Fig. 2 is a flow chart for the photomask inspecting apparatus shown in Fig. 1.

Fig. 3 is a drawing illustrating a vector comparing inspection process of the prior art in the case of a defect on a photomask pattern.

Fig. 4 is a drawing illustrating an example of the prior art vector comparing inspection in the case of another defect on a photomask pattern.

Fig. 5 is a drawing illustrating an example of the prior art vector comparing inspection in the case of still another defect on a photomask pattern.

Fig. 6 is a block diagram of an embodiment of a photomask inspecting apparatus applying a vector comparing method of the present invention.

Fig. 7 is a drawing illustrating an embodiment of a process for a vector comparing inspection of the present invention and showing how to detect a defect on a photomask pattern.

Fig. 8 is a drawing illustrating another embodiment of a process for a vector comparing inspection of the present invention and showing how to detect another defect on a photomask pattern.

Fig. 9 is a drawing illustrating still another embodiment of a process for a vector comparing inspection of the present invention and showing the detection of still another defect on a photomask pattern.

Fig. 10 is a flow chart for an embodiment of a photomask inspecting apparatus applying the vector comparing method according to the present invention shown in Fig. 6.

Fig. 11 is a flow chart for an embodiment of another photomask inspecting apparatus applying the vector comparing method according to the present invention.

Detailed Description of the Invention

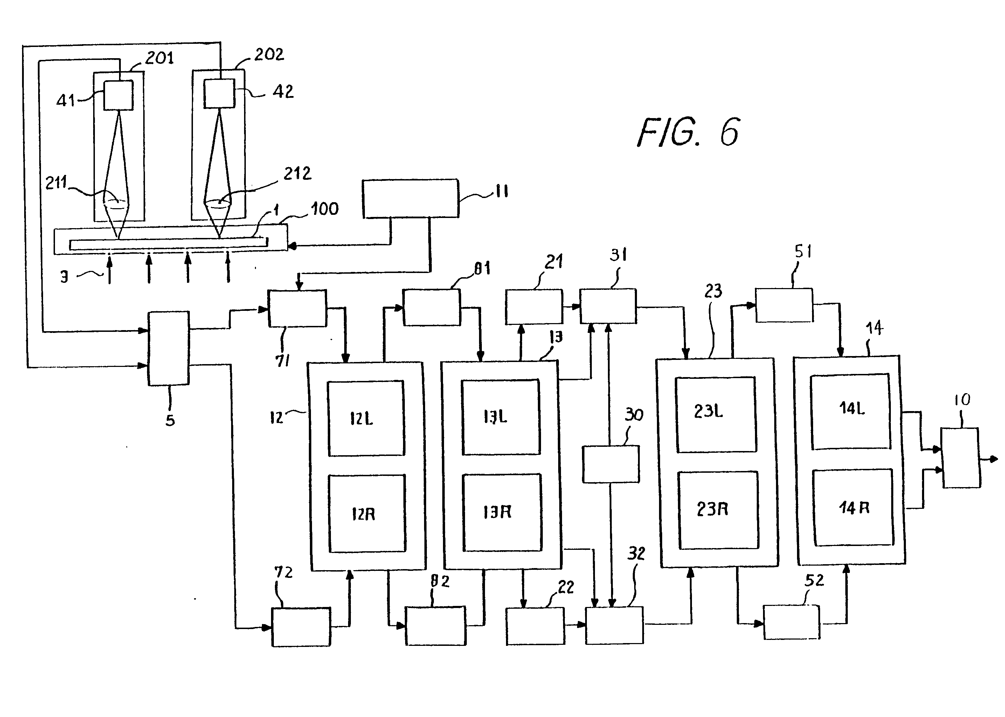

Fig. 6 shows a block diagram of an embodiment for a photomask inspecting apparatus applying a vector comparing method of the present invention. The elements of Figs. 1 and 6 having the same reference characters have the same functions and following units are added in the apparatus of Fig. 1:

(1) A left and a right data shifter 21 and 22:

they shift the separated data respectively in the left and right second memories 13L and 13R by a proper amount along longitude and latitude under the control of the operator to provide paired shifted data. This amount is previously decided by the information relative to the photomask pattern to be inspected.

(A) A left and a right data synthesizer 31 and 32 and a logic selector 30: the data synthesizers 31 and 32 respectively synthesize the shifted data and the original separated data providing paired synthesized data. In the synthesis, the following data calculation must be considered: B + B, B + G, B + W, G + G, G + W, and W + W. These can be made by following two logical calculations, one is "B priority logic" and the other is "W priority logic":

| | B priority logic | W priority logic |
|---|---|---|
| B + B — | B | B |
| B + G | B | G |
| B + W — | B | W |
| G + G — | G | G |
| G + W — | G | W |
| W + W — | W | W |

This B/W selection is also made by the operator, under actuation of a logic selector 30 before starting the inspection, as a function of the information relative to the photomask pattern to be inspected.

(3) A synthesized data memory 23 consisting of a left synthesized data memory 23L and a right one 23R: this memory stores the above synthesized data.

(4) A left vector generator 51 and a right one 52: their functions are almost equal to the vector generator 91 and 92 in Fig. 1 but the following two functions are added.

First, a new treatment of the datum G is provided; that is, a vector is provided though the neighboring data includes the datum G like B—G or G—W; the vector from B to G is provided for the arrangement B—G and the vector from G to W is provided for the arrangement G—W.

Second, vectors along diagonals are provided;

therefore, eight vectors can be used in total.

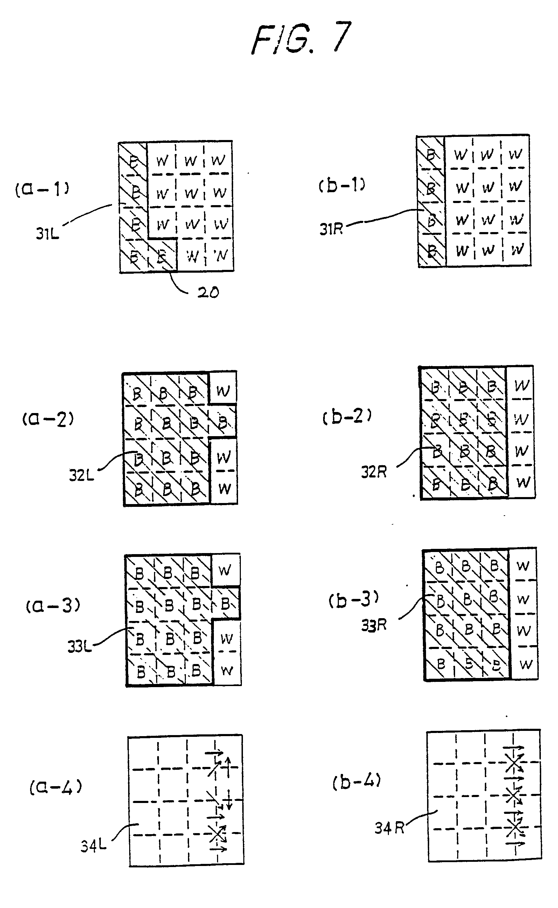

The functions of these additional units will be more concretely explained with reference to Figs. 7, 8 and 9.

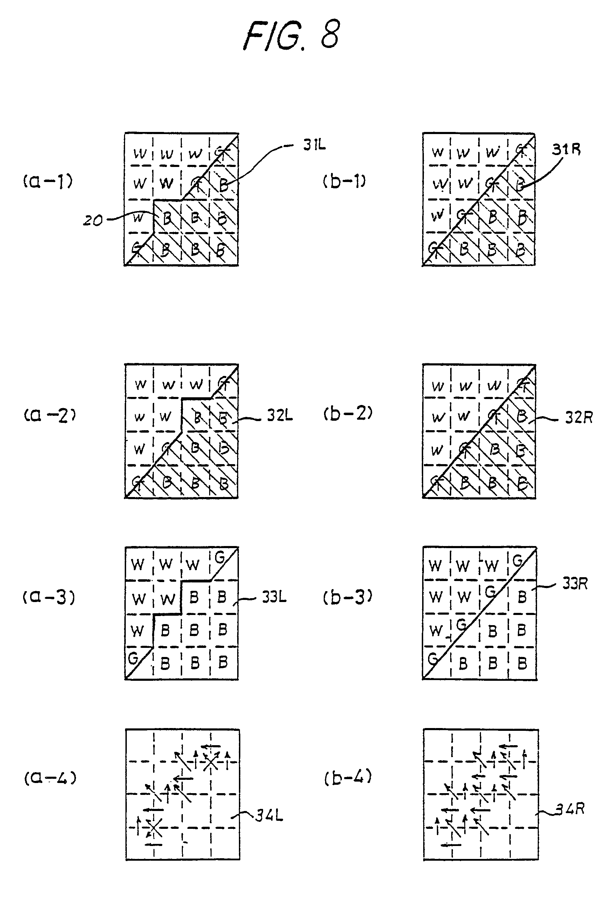

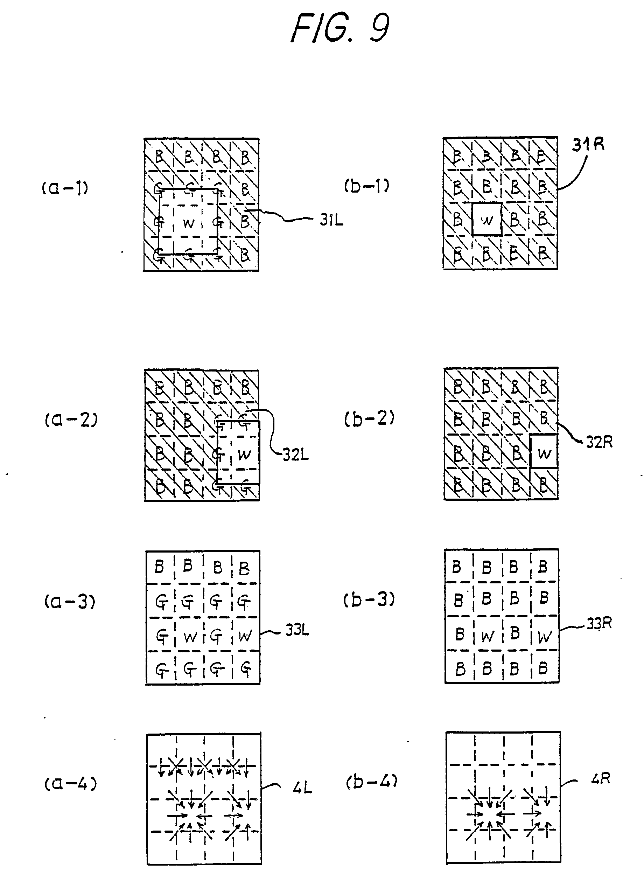

Fig. 7 shows an example of inspection of the photomask pattern by the apparatus of the present invention, using the same separated patterns which has been used in Fig. 3. In Fig. 7 (a—1) and (b—1) show the separated data stored respectively in the second memories 13L and 13R; thick solid lines show the respective separated patterns in which pattern 31L has a defective part 20 and pattern 31R is normal. These separated pattern data are respectively shifted by the data shifters 21 and 22; in this case, the shift amount is selected to be equal to two matrix elements and the shifting is performed toward a right and an up direction in the matrix of each second memory as shown by reference character 32L and 32R in (a—2) and (b—2) respectively; these figures are given only for explanation, they do not actually exist in memories. The original pattern data 31L and the shifted pattern data 32L, and the data 31R and 32R are respectively synthesized, to respective new patterns. The logical calculation "B priority logic" is applied in this case, so that the synthesized data become as shown by 33L and 33R in (a—3) and (b—3). The synthesized data are stored in the synthesized data memory 23, respectively in the left synthesized data memory 23L and the right one 23R. The left vector generator 51 and the right one 52 generate the vectors from the respective synthesized data, the generated vectors being such as shown by 34L and 34R in respective (a—4) and (b—4); these vectors are respectively stored in the left vector memory 14L and the right one 14R in the vector memory 14. The vector comparator 10 compares the summation of respective vectors in the vector memories 14L and 14R. The differences in the respective vectors of the eight kinds are as follows: up −1, down −1, right −1; diagonal (from left-up to right-down) −1; diagonal (from left-down to right-up) −1; and the remaining differences are all zero. Therefore, the vector comparator outputs the information that the photomask has a defect. In the above comparison, there are differences of five kinds, however, any one of these is sufficient to make the vector comparator 10 produce the defective information. The defect in the separated data mentioned above can also be detected by the prior art apparatus. However, the defects which will be shown in Figs 8 and 9 and which are the same as those of Figs. 4 and 5 respectively, cannot be detected by the prior art technology.

In Fig. 8, (a—1) and (b—1) show the separated data stored in the second memories 13L and 13R respectively; a pattern 31L has a defective part 20 and a pattern 31R is normal (a—2) and (b—2) show the shifted pattern data; the shift amount is of one matrix element toward right and one matrix element in the up direction. (a—3) and (b—3) show the respective synthesized data; the synthesis is also made by applying the "B priority logic". From the synthesized data, respective vector signals can be obtained as shown in (a—4) and (b—4). The vector comparator 10 compares the summation of respective vectors in the vector memories 14L and 14R. The differences in the respective vectors of the eight kinds are as follows: up −2, left −2, diagonal (from right-down to left-up) −2, diagonal (from left-down to right-up) −1, diagonal (from right -up to left-down) −1, and the remaining differences are all zero. Therefore, the vector comparator 10 outputs the information that the photomask has a defect.

In Fig. 9, (a—1) and (b—1) show the separated data stored in the second memory 13; in the separated patterns the square holes in pattern 31L and 31R should be equal in shape and size, but, actually, they are not equal in size. (a—2) and (b—2) show the respective shifted data; the shift amount is two matrix elements toward right. (a—3) and (b—3) show the synthesized data; each synthesis is made by applying the "W priority logic". From the synthesis data, respective vectors can be obtained as shown by (a—4) and (b—4). The vector comparator 10 compares the summation of respective vectors in the vector memories 14L and 14R. The differences in the respective vectors of the eight kinds are as follows: down-4, diagonal (from left-up to right-down) −3, diagonal (from right-up to left-down) −3, and the remaining differences are all zero. Therefore, the vector comparator 10 outputs the information that the photomask has a defect.

In the above explanation, the determination of the shift amount and the selection of the B/W priority logic can be performed by the operator skilled in the art of the photomask inspection. However, if the photomask inspection is required to be performed without the action of an operator, this can be met by providing the necessary software or hardware to perform sequentially several inspections in order to select properly the shift amount and the B/W priority logic. If a short inspecting time is required, this can be met by providing several data shifters in parallel, each for a particular shift amount, and the corresponding data synthesizers. So, several inspection outputs are obtained simultaneously, and if one of them produces an information indicative of a defect, it can be decided that the photomask has a defect.

Furthermore, the threshold levels to provide the digital data B, G, and W in the amplitude distributor 5 and the shift amount set in the data shifters 21 and 22 can be selected properly considering the shape of the pattern or the size of the defect to be inspected. In the comparator 10, the detection sensitivity can be changed, considering the feature of the pattern to be inspected, by adjusting a threshold amount to be exceeded by the vector difference to produce the output information indicative of a defect. This is to avoid the occurrence of false errors.

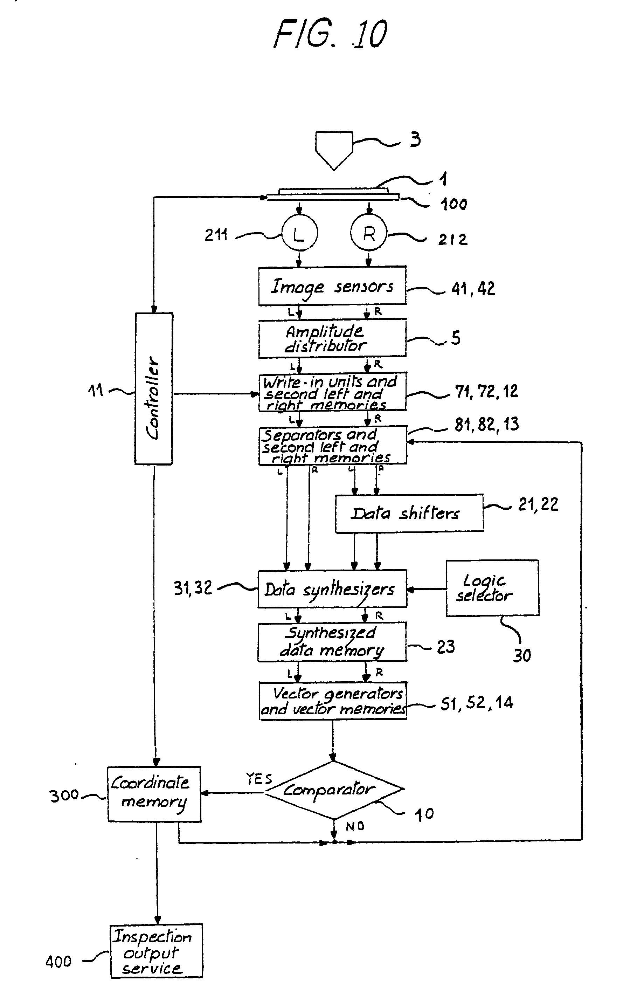

Fig. 10 is a flow chart relative to the inspecting apparatus of the present invention shown in Fig. 6; Fig. 10 has the same reference numerals as Fig. 6, and reference numerals 300 and 400 are the same as in Fig. 2. The data shifters 21 and 22 in Fig. 10 shift the data read in the second memory 13.

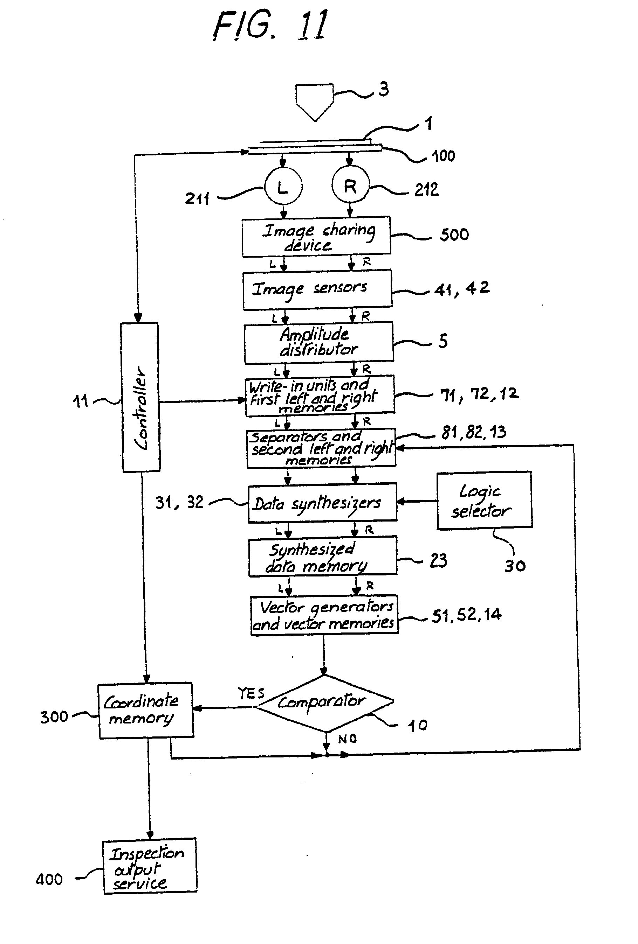

However, this data shifting can also be provided in the optical system, this shifting being then called image sharing. Fig. 11 shows a flow chart applying the image sharing immediately prior to the image sensing. Compared to Figure 10, the data shifters 21, 22 are cancelled and reference numeral 500 is added to show a block corresponding to an image sharing device. In this case, the image sharing is performed in relation to the second data memory 13 and the data synthesizers 31 and 32.

The image showing device periodically shifts the optical images provided by the lens systems 211, 212, respectively. The shifting is performed by a shift amount corresponding to an amount of picture elements of the optical images, the amount of picture elements being provided by precognition of the photomask pattern. Thus, a pair of optical images and a pair of shifted optical images are periodically provided.

As mentioned with reference to Figs. 8 and 9, the defects in photomask patterns which were impossible to detect by the prior art technology become detectable by using the present invention.

## Claims

1. An inspection method for a photomask pattern applying a vector comparing method, said inspection method comprising the steps of:

taking a pair of optical images from paired parts of the photomask pattern which are to be compared;

converting said pair of optical images into two grouped electrical analog signals;

distributing said two grouped analog signals into two grouped digital data, each datum thereof being selected among three data B, G, or W in accordance with high, middle, or low amplitude of said analog signals;

separating sequentially and respectively two grouped separated data (a—1, b—1, Fig. 7—9) from said two grouped digital data, the number of matrix elements of said grouped separated data being less than those of said grouped digital data;

providing at least two grouped shifted data (a—2, b—2, Figs. 7—9) which are respectively shifted with respect to said two grouped separated data by at least a shift amount of at least one matrix element in a latitudinal or longitudinal direction or both in latitudinal and longitudinal directions;

synthesizing each of said two grouped separated data with one or each respective grouped shifted data for providing at least two grouped synthesized data (a—3, b—3, Figs. 7—9), the data B, G and W in said grouped synthesized data being logically calculated by applying following B priority logic or W priority logic in said synthesizing step:

|         | B priority logic | W priority logic |
|---------|------------------|------------------|
| B + B — | B                | B                |
| B + G — | B                | G                |
| B + W — | B                | W                |
| G + G — | G                | G               .|
| G + W — | G                | W                |
| W + W — | W                | W                |

the choice between said B and W priority logics being made on precognition of said photomask pattern;

generating vectors from the arrangements of said at least two grouped synthesized data for providing at least two grouped vectors (a—4, b—4, Figs. 7—9), comprising:

a vector having a direction from B to W when said synthesized data are arranged neighboringly B—W in a latitudinal, a longitudinal, or a diagonal direction,

a vector having a direction from B to G for said data arranged neighboringly B—G in said directions, or

a vector having a direction from to G to W for said data arranged neighboringly G—W in said directions, all vectors having an equal magnitude;

summing respective amounts of vectors each having a same direction in each grouped vector

comparing respectively said summations in said at least two grouped vectors for detecting differences between said summations; and

producing an output indicative that said photomask pattern has a defect when at least one difference is detected.

2. An inspecting method according to claim 1, characterized in that said shift amount is determined on precognition of said photomask pattern.

3. An inspection method according to claim 1 characterized in that said two grouped shifted data are provided by taking a pair of shifted optical images by shifting the optical images of said paired parts of the photomask pattern to be compared by said shift amount, and applying said converting step, said distributing step and said separating step on said shifted optical images.

4. An apparatus for inspecting a photomask pattern applying a vector comparing method, said apparatus comprising:

a pair of optical systems each comprising a lens system (211, 212) and an image sensor (41, 42) for taking a pair of optical images from paired parts of the photomask pattern which are to be compared and converting said pair of optical images into two grouped electrical analog signals;

amplitude distribution means for distributing said two grouped analog signals into two grouped digital data, each datum thereof being selected among three data B, G or W in accordance with high, middle, or low amplitude of said analog signals;

first memory means (12L, 12R) for storing said two grouped digital data;

data separating means (81, 82) for separating sequentially and respectively two grouped separated data (a—1, b—1, Figs. 7—9) from said two grouped digital data, the number of matrix elements of said grouped separated data being less than those of said grouped digital data;

second memory means (13L, 13R) for storing said two grouped separated data (a—1, b—1, Figs. 7—9)

means for providing at least two grouped shifted data (a-2, b-2, Figs. 7-9) which are respectively shifted with respect to said two grouped separated data by at least a shift amount of at least one matrix element in a latitudinal or longitudinal direction or both in latitudinal and longitudinal directions;

data synthesizing means (31, 32) for synthesizing each of said two grouped separated data with one or each respective grouped shifted data for providing at least two grouped synthesized data (a—3, b—3, Figs. 7—9), the data B, G and W in said grouped synthesized data being logically calculated by applying following B priority logic or W priority logic in said synthesizing step:

|  | B priority logic | W priority logic |
|---|:---:|:---:|
| B + B − | B | B |
| B + G − | B | G |
| B + W − | B | W |
| G + G − | G | G |
| G + W − | G | W |
| W + W − | W | W |

a logic selector (30) for selecting either said B priority logic or said W priority logic for the logical calculations in said data synthesizing means, the choice between said B and W priority logics being made on precognition of said photomask pattern;

third memory means (23L, 23R) for storing said two grouped synthesized data (a—3, b—3, Figs. 7—9),

vectors generating means (51, 52) for generating vectors from the arrangements of said at least two grouped synthesized data for providing at least two grouped vectors (a—4, b—4, Figs. 7—9), comprising:

a vector having a direction from B to W when said synthesized data are arranged neighboringly B—W in a latitudinal, a longitudinal, or a diagonal direction,

a vector having a direction from B to G for said data arranged neighboringly B—G in said directions, or

a vector having a direction from G to W for said data arranged neighboringly G—W in said directions, all vectors having an equal magnitude;

fourth memory means (14L, 14R) for storing said two grouped vectors; and

vector processing means (10) for summing respective amounts of vectors each having a same direction in each grouped vector; comparing respectively said summations in said at least two grouped vectors for detecting differences between said summations; and producing an output indicative that said photomask pattern has a defect when at least one difference is detected.

5. An apparatus according to claim 4, characterized in that said means for providing at least two grouped shifted data (a—2, b—2, Figs. 7—9), comprise paired data shifters (21, 22) receiving said two grouped separated data (a—1, b—1, Figs. 7—9).

6. An apparatus according to claim 4, characterized in that:

said means for providing at least two grouped shifted data, comprise a plurality of paired data shifters

8

# EP 0 138 665 B1

for shifting said two grouped separated data by a plurality of different amounts in order to provide a plurality of paired shifted data,

said data synthesizing means comprise a plurality of paired data synthesizers for providing a plurality of paired synthesized data with at least two grouped synthesized data in said plurality being synthesized by logical calculation according to the B priority logic and at least two other grouped synthesized data in said plurality being synthesized by logical calculation according to the W priority logic;

said third memory means comprise a plurality of paired memories for storing said plurality of paired synthesized data;

said vectors generating means comprise a plurality of paired vectors generators for generating a plurality of paired vectors from the arrangements of said plurality of paired synthesized data, respectively;

said fourth memory means comprise a plurality of paired memories for storing said plurality of paired vectors; and

said vectors processing means is adapted for comparing the summations obtained in each of the plurality of said paired vectors and producing said output if a difference is detected from at least one comparison.

7. An apparatus according to claim 4, characterized in that said means for providing said at least two grouped shifted data comprise image sharing means for respectively and periodically shifting said pair of optical images by said shift amount.

## Patentansprüche

1. Inspektionsverfahren für ein Photomaskenmuster mit Anwendung eines Vektorvergleichsverfahrens, welches genannte Inspektionsverfahren die folgenden Schritte umfaßt:

Nehmen eines Paares von optischen Bildern von paarigen Teilen des photomaskenmusters, welche miteinander verglichen werden sollen;

Konvertieren des genannten Paares von optischen Bildern in zwei gruppierte elektrisch analoge Signale;

Verteilen der genannten beiden gruppierten Analogsignale in zwei gruppierte Digitaldaten, von denen jedes Datum jeweils aus drei Daten B, G oder W in übereinstimmung mit hoher, mittlerer oder niedriger Amplitude der genannten Analogsignale, ausgewählt wird;

sequentielles und jeweiliges Trennen von zwei gruppierten separierten Daten (a—1, b—1; Fig. 7—9) von den genannten beiden gruppierten digitalen Daten, wobei die Anzahl der Matrixelemente der genannten gruppierten separierten Daten kleiner als diejenige der genannten gruppierten digitalen Daten ist;

Vorsehen von wenigstens zwei gruppierten verschobenen Daten (a—2, b—2, Fig. 7—9), welche jeweils in Bezug auf die genannten beiden gruppierten separierten Daten um wenigstens einen Verschiebungsbetrag von wenigstens einem Matrixelement in einer Breiten- oder Längenrichtung oder sowohl in Breiten- als auch in Längenrichtung verschoben sind;

Nachbilden jeder der genannten beiden gruppierten separierten Daten mit einem oder allen entsprechenden gruppierten verschobenen Daten, um wenigstens zwei gruppierte nachgebildete Daten (a—3, b—3, Fig. 7—9) vorzusehen, wobei die Daten B, G und W in den genannten gruppierten nachgebildeten Daten logisch berechnet werden, durch Anwendung der folgenden B-Prioritätslogik oder W-Prioritätslogik in dem genannten Nachbildungsschritt:

|  | B-Prioritäts logik | W-Prioritäts logik |
| --- | --- | --- |
| B + B − | B | B |
| B + G − | B | G |
| B + W − | B | W |
| G + G − | G | G |
| G + W − | G | W |
| W + W − | W | W |

wobei die Wahl zwischen B- und W-Prioritätslogiken auf Vorerkennung des genannten Photomaskenmusters hin durchgeführt wird;

Erzeugen von Vektoren für die Anordnungen der genannten wenigstens zwei gruppierten nachgebildeten Daten, um wenigstens zwei gruppierte Vektoren (a—4, b—4, Fig. 7—9) vorzusehen, welche umfassen:

einen Vektor, der eine Richtung von B nach W hat, wenn die genannten nachgebildeten Daten in einer Breiten-, einer Längs- oder einer Diagonalrichtung neben B—W angeordnet sind,

9

einen Vektor, welcher eine Richtung von B nach G für die genannten Daten hat, die neben B—G in den genannten Richtungen angeordnet sind, oder

einen Vektor, der eine Richtung von G nach W hat, für die genannten Daten, die neben G—W in den genannten Richtungen angeordnet sind, wobei alle Vektoren die gleiche Größe haben;

Summieren jeweiliger Beträge von Vektoren, die jeweils eine gleiche Richtung in jedem gruppierten Vektor haben

jeweiliger Vergleich der genannten Summen in den genannten wenigstens zwei gruppierten Vektoren zum Detektieren von Differenzen zwischen den genannten Summen; und

Erzeugen eines Ausgangs, welcher anzeigt, daß das genannte Photomaskenmuster einen Defekt hat, wenn wenigstens eine Differenz detektiert wird.

2. Inspektionsverfahren nach Anspruch 1, dadurch gekennzeichnet, daß der genannte Verschiebebetrag auf Vorerkennen des genannten Photomaskenmusters hin bestimmt wird.

3. Inspektionsverfahren nach Anspruch 1, dadurch gekennzeichnet, daß die genannten beiden gruppierten verschobenen Daten erzeugt werden, indem ein Paar von verschobenen optischen Bildern aufgenommen werden, durch Verschieben der optischen Bilder der genannten paarigen Teile des Photomaskenmusters, die verglichen werden sollen, um den genannten Verschiebebetrag, und durch Anwenden des genannten Konvertierungsschrittes, des genannten Verteilungsschrittes und des genannten Trenn- schrittes auf die genannten verschobenen optischen Bilder.

4. Vorrichtung zum Inspizieren eines Photomaskenmusters mit Anwendung eines Vektorvergleichsverfahrens, welche Vorrichtung umfaßt:

ein Paar von optischen Systemen, die jeweils ein Linsensystem (211, 212) und einen Bildsensor (41, 42) umfassen, um ein Paar von optischen Bildern von paarigen Teilen der Photomaskenmuster aufzunehmen, die miteinander verglichen werden sollen, und zum Konvertieren des genannten Paares von optischen Bildern in zwei gruppierte elektrische Analogsignale;

Amplitudenverteilungseinrichtungen zum Verteilen der genannten beiden gruppierten Analogsignale in zwei gruppierte Digitaldaten von denen jedes Datum jeweils aus drei Daten B, G oder W in übereinstimmung mit hoher, mittlerer oder niedriger Amplitude der genannten Analogsignale ausgewählt wird;

erste Speichereinrichtungen (12L, 12R) zum Speichern der genannten beiden gruppierten digitalen Daten;

Datentrenneinrichtungen (81, 82), zum sequentiellen und jeweiligen Trennen von zwei gruppierten separierten Daten (a—1, b—1; Fig. 7—9) von den genannten beiden gruppierten digitalen Daten, wobei die Anzahl der Matrixelemente der genannten gruppierten separierten Daten kleiner als diejenige der genannten gruppierten digitalen Daten ist;

zweite Speichereinrichtungen (13L, 13R) zum Speichern der beiden genannten beiden gruppierten separierten Daten (a—1, b—1, Fig. 7—9);

Einrichtungen zum Liefern von wenigstens zwei gruppierten verschobenen Daten (a—2, b—2, Fig, 7—9), welche jeweils in Bezug auf die genannten beiden separierten Daten um wenigstens einen verschiebungsbetrag von wenigstens einem Matrixelement in Breiten- oder Längenrichtung oder in Breiten- und Längenrichtung verschoben sind;

Synthetisiereinrichtungen (31, 32) zum Nachbilden jeder der genannten beiden gruppierten separaten Daten mit einem oder allen jeweils entsprechenden gruppierten verschobenen Daten, um wenigstens zwei gruppierte nachgebildete Daten (a—3, b—3, Fig, 7—9) vorzusehen, wobei die Daten B, G und W in den genannten gruppierten nachgebildeten Daten durch Anwendung der folgenden B-Prioritätslogik oder W-Prioritätslogik in dem genannten Nachbildungsschritt logisch berechnet werden:

|  | B-Prioritäts logik | W-Prioritäts logik |
|---|---|---|
| B + B — | B | B |
| B + G — | B | G |
| B + W — | B | W |
| G + G — | G | G |
| G + W — | G | W |
| W + W — | W | W |

einen Logikselektor (30) zum Auswählen entweder der genannten B-Prioritätslogik oder der genannten W-Prioritätslogik für die logischen Berechnungen in der genannten Synthetesiereinrichtung, wobei die Wahl zwischen den genannten B- und W-Prioritätslogiken auf die Vorerkennung des genannten Photomaskenmusters hin getroffen wird;

EP 0 138 665 B1

dritte Speichereinrichtungen (23L, 23R) zum Speichern der genannten beiden gruppierten nachgebildeten Daten (a—3, b—3, Fig. 7—9), Vektorgeneratoreinrichtungen (51, 52) zum Erzeugen von Vektoren aus den Anordnungen der genannten wenigstens zwei gruppierten nachgebildeten Daten, um wenigstens zwei gruppierte Vektoren (a—4, b—4, Fig. 7—9) zu liefern, die umfassen:

einen Vektor, der eine Richtung von B nach W hat, wenn die genannten nachgebildeten Daten in einer Breiten-, einer Längen- oder einer Diagonalrichtung neben B—W angeordnet sind,

einen Vektor, welcher eine Richtung von B nach G hat, für die genannten Daten, die neben B—G in den genannten Richtungen angeordnet sind, oder

einen Vektor, der eine Richtung von G nach W hat, für die genannten Daten, die neben G—W in den genannten Richtungen angeordnet sind, wobei alle Vektoren die gleiche Größe haben;

vierte Speichereinrichtungen (14L, 14R) zum Speichern der genannten beiden gruppierten Vektoren; und

Vektorverarbeitungseinrichtungen (10) zum Summieren entsprechender Beträge von Vektoren, die jeweils dieselbe Richtung in jedem gruppierten Vektor haben; Vergleichen der jeweils genannten Summen in den genannten wenigstens zwei gruppierten Vektoren zum Detektieren von Unterschieden zwischen den genannten Summen; und Erzeugen eines Ausgangs, der anzeigt, daß das genannte Photomaskenmuster einen Defekt hat, wenn wenigstens eine Differenz entdeckt wird.

5. Vorrichtung nach Anspruch 4, dadurch gekennzeichnet, daß die Einrichtung zur Lieferung von wenigstens zwei gruppierten verschobenen Daten (a—2, b—2, Fig. 7—9) ein Paar von Datenschiebern (21, 22) zum Empfang der beiden gruppierten separierten Daten (a—1, b—1, Fig. 7—9) umfaßt.

6. Vorrichtung nach Anspruch 4, dadurch gekennzeichnet, daß:

die genannten Einrichtungen zur Lieferung von wenigstens zwei gruppierten verschobenen Daten eine Vielzahl von Paaren von Datenschiebern zum Verschieben der genannten beiden gruppierten separierten Daten um eine Vielzahl von verschiedenen Beträgen, um eine Vielzahl von paarigen verschobenen Daten zu liefern, umfaßt,

die genannte Datensynthetisiereinrichtung eine Vielzahl von paarigen Datennachbildern umfaßt, um eine Vielzahl von paarigen nachgebildeten Daten zu erzeugen, wobei wenigstens zwei gruppierte nachgebildete Daten in der genannten Vielzahl durch eine Logikberechnung entsprechend der B-Prioritätslogik nachgebildet werden, und wenigstens zwei andere gruppierte nachgebildete Daten in der genannten Vielzahl durch logische Berechnung entsprechend der W-Prioritätslogik nachgebildet werden;

die genannte dritte Speichereinrichtung eine Vielzahl von paarigen Speichern zum Speichern der genannten Vielzahl von paarigen nachgebildeten Daten umfassen;

die genannten Vektorerzeugungseinrichtungen eine Vielzahl von paarigen Vektorgeneratoren umfassen, zum Generieren einer Vielzahl von paarigen Vektoren von den Anordnungen für jeweils die genannte Vielzahl von paarigen nachgebildeten Daten; und

die genannten vierten Einrichtungen eine Vielzahl von paarigen Speichern zum Speichern der genannten Vielzahl von paarigen Vektoren umfaßt; und

die genannte Vektorverarbeitungseinrichtung eingerichtet ist, um die Summen zu vergleichen, die in jeder der Vielzahl von genannten paarigen Vektoren erhalten wurden, und um den genannten Ausgang zu erzeugen, falls eine Differenz bei wenigstens einem Vergleich detektiert wird.

7. Vorrichtung nach Anspruch 4, dadurch gekennzeichnet, daß die genannte Einrichtung zum Liefern von wenigstens zwei kopierten verschobenen Daten Bildteilungseinrichtungen umfaßt, um jeweils und periodisch das genannte Paar von optischen Bildern um den genannten Verschiebungsbetrag zu verschieben.

## Revendications

1. Procédé d'inspection d'une configuration de photomasque, qui applique un procédé de comparaison de vecteurs, ledit procédé d'inspection comprenant les opérations suivantes:

prendre une paire d'images optiques à partir de parties appariées de la configuration de photomasque qui doivent être comparées;

convertir lesdites deux images optiques en deux signaux analogiques électriques groupés;

distribuer lesdits deux signaux analogiques groupés en deux données numériques groupées, chacune de ces données étant choisie entre trois données B, G et W selon que lesdits signaux analogiques sont d'amplitude élevée, moyenne ou basse;

séparer séquentiellement et respectivement deux données séparées groupées (a—1, b—1, figures 7—9) dans lesdites deux données numériques groupées, le nombre d'éléments matriciels desdites données séparées groupées étant inférieur à celui desdites données numériques groupées;

produire au moins deux données décalées groupées (a—2, b—2, figures 7—9) qui sont respectivement décalées par rapport auxdites deux données séparées groupées d'au moins une quantité de décalage qui vaut au moins un élément matriciel dans la direction de la largeur ou celle de la longueur ou dans les deux directions de la largeur et de la longueur;

synthétiser chacune desdites deux données séparées groupées avec l'une ou chacune des données décalées groupées respectives afin de produire au moins deux données synthétisées groupées (a—3, b—3, figures 7—9), les données B, G et W contenues dans lesdites données synthétisées groupées étant

11

calculées de manière logique par application, dans ladite opération de synthèse, des règles logiques de priorité de B ou de priorité de W suivantes:

| | Règle logique de priorité de B | Règle logique de priorité de W |
|---|---|---|
| B + B − | B | B |
| B + G − | B | G |
| B + W − | B | W |
| G + G − | G | G |
| G + W − | G | W |
| W + W − | W | W |

le choix entre lesdites règles logiques de priorité de B et de W étant fait sur la base d'une connaissance préalable de ladite configuration de photomasque;

produire des vecteurs à partir des dispositions desdites données synthétisées groupées au nombre d'au moins deux de manière à produire au moins deux vecteurs groupées (a—4, b—4, figures 7—9), lesquels vecteurs comprennent;

un vecteur dont le sens va de B vers W lorsque lesdites données synthétisées sont disposées de manière à présenter un voisinage B—W suivant la direction de la largeur, la direction de la longueur ou une direction diagonale,

un vecteur dont le sens va de B vers G pour lesdites données disposées de manière à présenter un voisinage B—G dans lesdites directions, ou

un vecteur dont le sens va de G vers W pour lesdites données disposées de manière à présenter un voisinage G—W dans lesdites directions, tous les vecteurs ayant la même amplitude;

additionner les quantités respectives de vecteurs ayant chacun un même sens dans chaque vecteur groupé;

comparer respectivement les résultats desdites additions dans lesdits vecteurs groupés au nombre d'au moins deux afin de détecter des différences entre lesdits résultats; et

produire un signal de sortie indicatif du fait que ladite configuration de photomasque possède un défaut lorsqu'il est détecté au moins une différence.

2. Procédé d'inspection selon la revendication 1, caractérisé en ce que ladite quantité de décalage est déterminée sur la base de la connaissance préalable de ladite configuration de photomasque.

3. Procédé d'inspection selon la revendication 1, caractérisé en ce qu'on obtient lesdites deux données décalées groupées en prenant une paire d'images optiques décalées obtenue par un décalage, de ladite quantité de décalage, des images optiques desdites parties appariées de la configuration de photomasque devant être comparées et en appliquant ladite opération de conversion, ladite opération de distribution et ladite opération de séparation auxdites images optiques décalées.

4. Appareil d'inspection d'une configuration de photomasque, qui applique un procédé de comparaison de vecteurs, ledit appareil comprenant:

une paire de systèmes optiques comprenant chacun un objectif optique (211, 212) et un capteur d'image (41, 42) servant à prendre une paire d'images optiques à partir de parties appariées de la configuration de photomasque qui doivent être comparées et à convertir ladite paire d'images optiques en deux signaux analogiques électriques groupés;

un moyen de distribution d'amplitude servant à répartir lesdits deux signaux analogiques groupés en deux données numériques groupées, chacune de ces données étant choisie entre trois données B, G et W selon que l'amplitude desdits signaux analogiques est élevé, moyenne ou basse;

une première mémoire (12L, 12R) servant à emmagasiner lesdites deux données numériques groupées;

un moyen de séparation de données (81, 82) servant à séparer séquentiellement et respectivement deux données séparées groupées (a—1, b—1, figures 7—9) dans lesdites deux données numériques groupées, le nombre d'éléments matriciels desdites données séparées groupées étant inférieur à celui desdites données numériques groupées;

une deuxième mémoire (13L, 13R) servant à emmagasiner lesdites deux données séparées groupées (a—1, b—1, figures 7—9);

un moyen servant à produire au moins deux données décalées groupées (a—2, b—2, figures 7—9) qui sont respectivement décalées par rapport auxdites deux données séparées groupées d'au moins une quantité de décalage valant au moins un élément matriciel dans la direction de la largeur, la direction de la longueur ou bien les deux directions de la largeur et de la longueur;

un moyen de synthèse de données (31, 32) servant à synthétiser chacune desdites deux données séparées groupées avec l'une ou chacune des données décalées groupées respectives afin de produire au moins deux données synthétisées groupées (a—3, b—3, figures 7—9), les données B, G et W contenues dans lesdites données synthétisées groupées étant calculées de manière logique par application, lors de ladite opération de synthèse, des règles logiques de priorité de B ou de priorité de W suivantes:

|  | Règle logique de priorité de B | Règle logique de priorité de W |
|---|---|---|
| B + B — | B | B |
| B + G — | B | G |
| B + W — | B | W |
| G + G — | G | G |
| G + W — | G | W |
| W + W — | W | W |

un sélecteur logique (30) servant à sélectionner ladite règle logique de priorité de B ou ladite règle logique de priorité de W pour les calculs logiques effectués dans ledit moyen de synthèse de données, le choix entre lesdites règles logiques de priorité de B et de W s'effectuant sur la base de la connaissance préalable de ladite configuration de photomasque;

une troisième mémoire (23L, 23R) servant à emmagasiner lesdites deux données synthétisées groupées (a—3, b—3, figures 7—9);

un moyen générateur de vecteurs (51, 52) servant à produire des vecteurs à partir de la disposition desdites données synthétisées groupées au nombre d'au moins deux afin de produire au moins deux vecteurs groupés (a—4, b—4, figures 7—9), lesquels vecteurs comprennent:

un vecteur dont le sens va de B vers W lorsque lesdites données synthétisées sont disposées de manière à présenter un voisinage B-W suivant la direction de la largeur, la direction de la longueur ou une direction diagonale, un vecteur dont le sens va de B vers G pour lesdites données présentant un voisinage B—G dans lesdites directions, ou un vecteur dont le sens va de G vers W pour lesdites données disposées de manière à présenter un voisinage G—W dans lesdites directions, tous les vecteurs ayant la même amplitude;

une quatrième mémoire (14L, 14R) servant à emmagasiner lesdits deux vecteurs groupés; et un moyen de traitement de vecteurs (10) servant à additionner les quantités respectives de vecteurs ayant chacun un même sens dans chaque vecteur groupé; à comparer respectivement les résultats desdites additions dans lesdits vecteurs groupés au nombre d'au moins deux afin de détecter des différences entre lesdits résultats; et

à produire un signal de sortie indicatif du fait que ladite configuration de photomasque possède un défaut lorsqu'il est détecté au moins une différence.

5. Appareil selon la revendication 4, caractérisé en ce que le moyen servant à produire au moins deux données décalées groupées (a—2, b—2, figures 7—9) comprend des dispositifs appariés de décalage de données (21, 22) recevant lesdites deux données séparées groupées (a—1, b—1, figures 7—9).

6. Appareil selon la revendication 4, caractérisé en ce que:

ledit moyen servant à produire au moins deux données décalées groupées comprend une pluralité de dispositifs appariés de décalage de données servant à décaler lesdites deux données séparées groupées d'une pluralité de quantités différentes afin de produire une pluralité de données décalées appariées;

ledit moyen de synthèse de données comprend une pluralité de dispositifs appariés de synthèse de données servant à produire une pluralité de données synthétisées appariées où au moins deux données synthétisées groupées de ladite pluralité sont synthétisées par un calcul logique reposant sur la base de la règle logique de priorité de B et au moins deux autres données synthétisées groupées de ladite pluralité sont synthétisées par un calcul logique reposant sur la base de la règle logique de priorité de W;

ladite troisième mémoire comprend une pluralité de mémoires appariées servant à emmagasiner ladite pluralité de données synthétisées appariées;

ledit moyen générateur de vecteurs comprend une pluralité de générateurs de vecteurs appariés servant à produire respectivement une pluralité de vecteurs appariés à partir des dispositions de ladite pluralité de données synthétisées appariées;

ladite quatrième mémoire comprend une pluralité de mémoires appariées servant à emmagasiner ladite pluralité de vecteurs apparies; et

ledit moyen de traitement de vecteurs est adapté pour comparer les résultats d'addition obtenus dans chaque paire de vecteurs de la pluralité desdits vecteurs appariés et à produire ledit signal de sortie si une différence est détectée dans au moins une comparaison.

7. Appareil selon la revendication 4, caractérisé en ce que ledit moyen servant à produire lesdites données décalées groupées au nombre d'au moins deux comprend un moyen de partage d'image servant à décaler respectivement et périodiquement, de ladite quantité de décalage, ladite paire d'images optiques.

FIG. 1   PRIOR ART

EP 0 138 665 B1

## FIG. 2   PRIOR ART

# FIG. 3   PRIOR ART

(a-1)

(b-1)

15L

20

15R

(a-2)

| B | B | W | W |
|---|---|---|---|
| B | B | B | W |
| B | B | W | W |
| B | B | W | W |

16L

(b-2)

| B | B | W | W |
|---|---|---|---|
| B | B | W | W |
| B | B | W | W |
| B | B | W | W |

16R

(a-3)

17L

(b-3)

17R

# *FIG. 4*   PRIOR ART

(a—1)

15L

(b—1)

15R

(a—2)

| W | W | W | G |
|---|---|---|---|
| W | W | G | B |
| W | B | B | B |
| G | B | B | B |

16L

(b—2)

| W | W | W | G |
|---|---|---|---|
| W | W | G | B |
| W | G | B | B |
| G | B | B | B |

16R

(a—3)

17L

(b—3)

17R

# FIG. 5 PRIOR ART

(a-1)

15L

(b-1)

15R

(a-2)

16L

| B | B | B | B |
| G | G | G | B |
| G | W | G | B |
| G | G | G | B |

(b-2)

16R

| B | B | B | B |
| B | B | B | B |
| B | W | B | B |
| B | B | B | B |

(a-3)

17L

(b-3)

17R

FIG. 6

# FIG. 7

(a-1)

31L

20

(b-1)

31R

(a-2)

32L

(b-2)

32R

(a-3)

33L

(b-3)

33R

(a-4)

34L

(b-4)

34R

# FIG. 8

(a-1)

(b-1)

(a-2)

(b-2)

(a-3)

(b-3)

(a-4)

(b-4)

# FIG. 9

(a-1)  31L

(b-1)  31R

(a-2)  32L

(b-2)  32R

(a-3)  33L

(b-3)  33R

(a-4)  4L

(b-4)  4R

## FIG. 10

3

1
100

211 — (L)  (R) — 212

Image sensors — 41, 42

L  R

Amplitude distributor — 5

L  R

Controller — 11

Write-in units and second left and right memories — 71, 72, 12

L  R

Separators and second left and right memories — 81, 82, 13

L  R  L  R

Data shifters — 21, 22

Data synthesizers — 31, 32

Logic selector — 30

L  R

Synthesized data memory — 23

L  R

Vector generators and vector memories — 51, 52, 14

Coordinate memory — 300

YES  Comparator — 10

NO

Inspection output service — 400

# FIG. 11